# EUROPÄISCHE PATENTSCHRIFT

(11) **EP 2 334 952 B1**
(45) Veröffentlichungstag und Bekanntmachung des Hinweises auf die Patenterteilung: **23.10.2013**
(21) Anmeldenummer: 09783432.9
(22) Anmeldetag: 25.09.2009
(51) Int. Cl.: F16H 25/20, F16H 25/24

(54) **SPINDELTRIEB MIT VERDREHSICHERUNG**
SPINDLE DRIVE HAVING ANTI-TURN MECHANISM
ENTRAÎNEMENT À BROCHE MUNI D UNE SÉCURITÉ ANTITORSION

(30) Priorität: 14.10.2008 DE 102008051544
(43) Veröffentlichungstag der Anmeldung: 22.06.2011
(73) Patentinhaber: Continental Automotive GmbH, 30165 Hannover (DE)
(72) Erfinder: SCHLECHT, Christian, 93105 Tegernheim (DE); STÜRZER, Jürgen, 94330 Aiterhofen (DE)
(86) Internationale Anmeldenummer: PCT/EP2009/062458
(87) Internationale Veröffentlichungsnummer: WO 2010/043484

(56) Entgegenhaltungen:
- EP-A- 0 509 362
- EP-A- 0 612 651
- US-A- 5 832 779

## Beschreibung

Die Erfindung betrifft eine Linearführung für eine Gewindespindel eines Spindeltriebs mit den Merkmalen vom Oberbegriff vom Patentanspruch 1. Ein entsprechender Spindeltrieb ist aus der US 5832779A bekannt, und dient als Verstell- und Verriegelungsvorrichtung bei einem Absperrschieber.

Zur Linearverschiebung von Objekten können Spindeltriebe verwendet werden, bei denen die Spindelmutter angetrieben wird, um die Gewindespindel entlang ihrer Achse linear zu verschieben. Um eine direkte Übersetzung einer Spindelmutterdrehung in eine Längsverschiebung der Gewindespindel zu erreichen, muss sichergestellt sein, dass sich die Gewindespindel nicht mit der Spindelmutter mitdreht. Die Gewindespindel wird hierzu üblicherweise drehfest an einem Bezugskörper angeordnet, der ferner so gestaltet ist, dass er die Drehung der Spindelmutter nicht behindert. Der Bezugskörper kann von einem beliebigen Körper, beispielsweise von einem Gehäuse, einem Gestell, aber auch einfach von dem zu verschiebenden Objekt gebildet werden.

Eine drehfeste Anordnung der Gewindespindel an dem Bezugskörper kann durch einen Formschluss der Gewindespindel mit dem Bezugskörper erreicht werden, bei dem beispielsweise ein stiftförmiges bzw. flügel- oder flossenförmiges Element in eine längsverlaufende Nut so eingreift, das es zwar längs der Nut, aber nicht quer zur Nut verschoben werden kann. Um eine ungehinderte Längsverschiebung der Gewindespindel sicherzustellen, ist die Längsrichtung der Nut parallel zur Achse der Gewindespindel ausgerichtet bzw. angeordnet. Unter paralleler Anordnung wird hierbei auch das Zusammenfallen der Längsrichtung der Nut mit der Achse der Gewindespindel verstanden. Die Nut und das darin eingreifende Element bilden zusammen eine Längsführung.

Die Passung zwischen Nut und darin eingreifendem Element muss im Hinblick auf geringe Übersetzungsverluste so gewählt werin der Regel zu einem Spiel, das beim Einsatz des Spindeltriebs zu Geräuschentwicklungen führen kann. Ferner werden aus kostentechnischen Gründen meist Nutgeometrien gewählt, die sich leicht ausformen lassen. Oft ist zum Ausformen eine Entformungsschräge erforderlich, die zu einer Veränderung der Nutbreite in Nutlängsrichtung führt. Das hierdurch bedingte Spiel ist in der Regel Ursache einer merklichen Geräuschentwicklung.

Ausgehend von der beschriebenen Problematik liegt der Erfindung die Aufgabe zugrunde, eine Längsführung anzugeben, bei der ein in eine Nut eingreifendes Element spielfrei in der Nut geführt wird.

Die Aufgabe wird gemäß den unabhängigen Ansprüchen der Erfindung gelöst.

Die Erfindung umfasst einen Spindeltrieb mit einer Spindelmutter und einer mittels einer Linearführung an einem Bezugskörper drehfest und axial verschiebbar gelagerten Gewindespindel, wobei die Achse der Gewindespindel parallel zur Längsrichtung der Linearführung angeordnet ist. Die Linearführung weist hierbei eine Nut und ein in die Nut eingreifendes Führungselement auf, dass einen elastischen Bereich umfasst, dessen Breite quer zur Längsrichtung der Linearführung größer als die maximale Nutbreite im zur Linearführung genutzten Bereich ist.

In diesem Zusammenhang wird darauf hingewiesen, dass die in dieser Beschreibung und den Ansprüchen zur Aufzählung von Merkmalen verwendeten Begriffe "umfassen", "aufweisen", "beinhalten", "entfalten" und "Mit", sowie deren grammatikalische Abwandlungen, generell eine nichtabschließende Aufzählung von Merkmalen, wie z.B. Verfahrensschritten, Einrichtungen, Bereichen, Größen und dergleichen bezeichnen, die in keiner Weise das Vorhandensein anderer oder zusätzlicher Merkmale oder Gruppierungen von anderen oder zusätzlichen Merkmalen ausschließt.

Der von der Erfindung umfasste Spindeltrieb ermöglicht, dass das Führungselement stets mit den Nutflanken in Berührung steht, wodurch eine spielfreie Linearführung erzielt und eine schwingende Bewegung des Spindelantriebs gedämpft wird. Da die schwingenden Bewegungen die Ursache für die Geräuschentwicklung darstellen, werden Geräuschentwicklungen mit der Dämpfung dieser Bewegungen minimiert. Da ferner eine nicht spielfreie Führung zu einem erhöhten Verschleiß führt, weist der oben bezeichnete Spindeltrieb auch eine erhöhte hohe Lebensdauer auf.

Die Erfindung wird in ihren abhängigen Ansprüchen weitergebildet.

Zum gedämpften Abstützen eines auf die Linearführung einwirkenden Drehmoments weist der elastische Bereich des Führungselements vorzugsweise ein Federelement auf. Eine Ausführung des Federelements in Form zweier gabelförmig miteinander verbundener Fortsätze ermöglicht eine einfache und kostengünstige Herstellung. Die beiden gabelförmig miteinander verbundenen Fortsätze sind dabei vorzugsweise so angeordnet, dass der äußere Abstand der freien Enden der Fortsätze quer zur Längsrichtung der Linearführung im unbelasteten Zustand größer ist, als die Nutbreite im zur Linearführung genutzten Bereich.

Insbesondere, wenn das Führungselement zusätzliche Aufgaben, wie zum Beispiel die Kraftübertragung an ein weiteres Objekt übernimmt, kann das Führungselement vorteilhaft zweiteilig ausgebildet sein, wobei es einen Grundkörper umfasst, der mit einem, den elastischen Bereich aufweisenden Aufsatzelement formschlüssig verbindbar ausgebildet ist.

Zum Abstützen größerer Drehmomente weist die Linearführung zweckmäßig wenigstens zwei Nuten auf, die parallel zueinander und parallel zur Achse der Gewindespindel angeordnet sind.

Bei einer der bevorzugten Ausführungsformen der Linearführung ist die Nut an dem Bezugskörper und das Führungselement an der Gewindespindel angeordnet. Bei einer weiteren vorteilhaften Ausführungsform der Linearführung ist die Nut an der Gewindespindel und das Führungselement am Bezugskörper angeordnet. Werden mehrere Nuten für die Linearführung verwendet, so kann ein Teil der Nuten am Bezugskörper und die in diese Nuten eingreifenden Führungselemente an der Gewindespindel angeordnet sein, während ein anderer Teil der Nuten an der Gewindespindel und die in sie eingreifenden Führungselemente am Bezugskörper angeordnet sind.

Zum Erzielen einer geringen Reibungszahl zwischen dem Führungselement und der Nut der Linearführung, sind zumindest die zum Kontaktieren der Seitenflächen der Nut bestimmten Flächen des Führungselements als Kunststoffoberflächen ausgebildet.

Weitere Merkmale der Erfindung ergeben sich aus der folgenden Beschreibung erfindungsgemäßer Ausführungsbeispiele in Verbindung mit den Ansprüchen sowie den Figuren. Die einzelnen Merkmale können bei einer Ausführungsform gemäß der Erfindung je für sich oder zu mehreren verwirklicht sein. Bei der nachfolgenden Erläuterung einiger Ausführungsbeispiele der Erfindung wird auf die beiliegenden Figuren Bezug genommen, von denen
- Figur 1: einen Spindeltrieb in einer Draufsicht und in einer Seitenansicht zeigt,
- Figur 2: eine zweiteilige Ausführung des Führungselements zeigt,
- Figur 3: das Aufsatzelement des Führungselements von Figur 2 perspektivisch in Alleinstellung zeigt,
- Figur 4: die Lage und Führung des Aufsatzelements von Figur 3 in der Nut der Linearführung veranschaulicht,
- Figur 5a: eine alternative Ausführung eines Aufsatzelements zeigt,
- Figur 5b: eine weitere alternative Ausführung eines Aufsatzelements zeigt,
- Figur 6: ein in einer Nut angeordnetes Führungselement gemäß einer weiteren alternativen Ausführungsform veranschaulicht,
- Figur 7: einen Querschnitt durch eine Linearführung zeigt, bei der die Nut an der Gewindespindel angeordnet ist, und
- Figur 8: einen Querschnitt durch eine Linearführung zeigt, bei der die Nut innerhalb der Gewindespindel angeordnet ist.

Gleiche oder gleichwirkende Komponenten sind in den Figuren mit gleichen Bezugszeichen versehen.

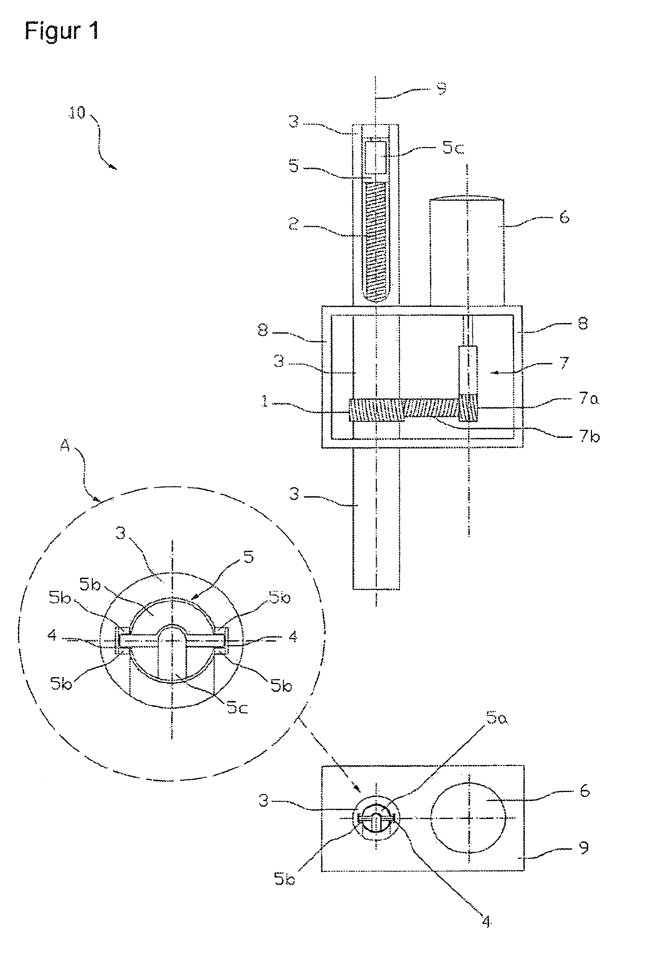

Figur 1 zeigt eine schematische Darstellung eines Spindeltriebs 10, dessen Gewindespindel 2 in einem teilweise offenen Gehäuse 3 durch Drehen der Spindelmutter 1 axial und ohne mitgedreht zu werden verschoben werden kann. Die Spindelmutter 1 des Spindeltriebs 10 wird über den Antrieb 6, beispielsweise einen Elektromotor, in Drehung versetzt. Das zwischen Antrieb 6 und Spindelmutter 1 angeordnete Getriebe 7 dient der Übersetzung der Drehzahl des Antriebs 6 an die Erfordernisse des Spindeltriebs. Das in der Figur 1 veranschaulichte Getriebe 7 umfasst zwei schrägverzahnte Außenräder 7a und 7b, wobei die Spindelmutter 1 ebenfalls eine Schrägverzahnung aufweist, die in das Rad 7b eingreift. Andere Getriebeformen, wie unter anderem z.B. Schneckenradgetriebe, Getriebe mit Innenradverzahnung, geradverzahnte Getriebe oder dergleichen mehr, können selbstverständlich ebenso verwendet werden. Ferner kann die Spindelmutter 1 auch in Form eines Direktantriebs beispielsweise als Element einer Hohlachse des Antriebs 6 ausgebildet sein. Das Getriebe 7 ist in einem Getriebegehäuse 8 untergebracht, das ferner auch als Halterung für das Spindeltriebgehäuse 3 und den vorzugsweise elektrischen Antrieb 6 dient.

Am Ende der Spindel 2 ist ein Führungselement 5 angeordnet, dass mit der Spindel 2 starr verbunden oder an dieses angeformt ist. In der dargestellten Ausführungsform weist das Führungselement 5 eine Ausnehmung 5c auf, in die ein Teil eines zu verschiebenden Objekts eingeführt werden kann.

Im unteren Teil der Figur 1 ist der Spindeltrieb 10 in einer Seitenansicht wiedergegeben, in der die Linearführung in einer Frontansicht erkennbar ist. Die Detailansicht A zeigt die Frontansicht der Spindeltrieb-Linearführung in vergrößertem Maßstab. Die in der Frontansicht von dem Führungselement 5 verdeckte Spindel 2 ist in einem Spindelgehäuse 3 angeordnet, das zwei einander gegenüberliegende Längsnuten 4 aufweist. Die Längsnuten 4 erstrecken sich im dargestellten Ausführungsbeispiel vom offenen Ende des Spindelgehäuses 3 in Richtung zur Spindelmutter 1. Die in dem Spindelgehäuse 3 ausgebildeten Nuten 4 sind sowohl parallel zueinander als auch parallel zur Spindelachse 9 angeordnet. Die Länge der Nuten 4 ist in der Regel etwas größer gewählt, als der Verschiebeweg der Spindel 2 im Spindelgehäuse 3.

Das Führungselement 5 weist einen Grundkörper 5a auf, an dem ein oder mehrere elastische Elemente 5b angebracht sind. Die elastischen Elemente 5b liegen im montierten Zustand, d.h. wenn das Führungselement 5 in die Nuten 4 eingreift, an den auch als Nutflanken bezeichneten Seitenwänden der Nut 4 an. In dem in der Figur 1 vorgestellten Fall weist das elastische Element 5b zu jeder Nut 4 zwei Gleitelemente auf, die einen am Grundkörper 5a ausgebildeten Vorsprung zwischen sich aufnehmen.

Im nicht montierten Zustand, d.h. wenn das Führungselement 5 nicht in die Nuten 4 eingreift, ist der Abstand der sich (in der Detailansicht A vertikal) gegenüberliegenden äußeren Flächen der zwei Gleitelemente etwas größer als die Nutbreite, die als Abstand der sich in der Nut gegenüberliegenden Nutflanken definiert ist. Wie bereits erwähnt, kann sich der Abstand der Nutflanken entlang der Längsrichtung der Nut ändern. In diesem Fall ist der Abstand der zwei äußeren Seitenflächen der jeweiligen Gleitelemente größer als die maximale Nutbreite im Verschiebebereich. Beim Einbringen des Führungselements 5 in die Nuten 4 werden die Gleitelemente elastisch zusammengedrückt, so dass das Führungselement 5 spielfrei an den Nutflanken anliegt.

Bei einer Drehung der Spindelmutter 1, z.B. über den Antrieb 6, wird die starr mit dem Führungselement 5 verbundene Gewindespindel 2 durch die oben beschriebene "Nut- und Federverbindung" am Mitdrehen gehindert. Der über die Nuten 4 vermittelte Formschluss des Führungselements 5 mit dem Spindelgehäuse 3 unterbindet jedoch nur ein Verdrehen der Gewindespindel 2 relativ zum Spindelgehäuse 3. Eine Längsverschiebung, d.h. eine Verschiebung der Gewindespindel längs ihrer Achse, wird aufgrund der Anordnung der Nuten 4 mit der Nutlängsrichtung parallel zur Achse 9 der Gewindespindel 2 nicht behindert. Die durch den formschlüssigen Eingriff des Führungselements 5 in die Nuten 4 gebildete "Nut- und Federverbindung" stellt somit eine Linearführung dar, die gewährleistet, dass eine Drehung der Spindelmutter 1 spielfrei in eine Längsverschiebung der Gewindespindel 2 umgesetzt wird.

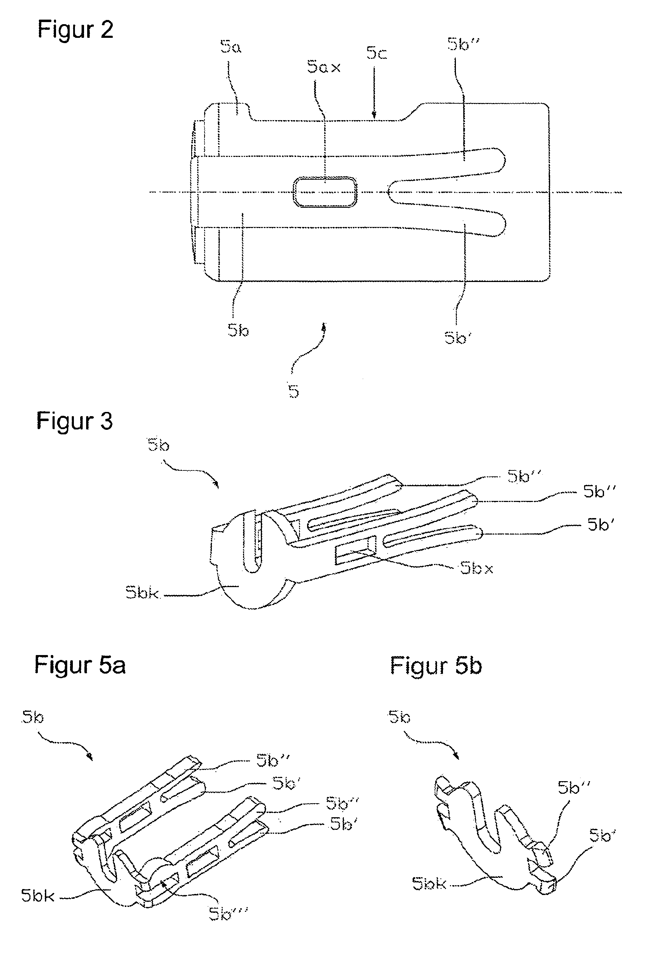

Figur 2 zeigt ein Beispiel für ein zweiteilig aufgebautes Führungselement in einer Seitenansicht. Das Führungselement setzt sich aus einem Grundkörper 5a und einem mit diesem formschlüssig verbundenen Aufsatz 5b zusammen. Der Aufsatz 5b ist aus einem elastischen Material, vorzugsweise einem Kunststoffmaterial gefertigt. Figur 3 zeigt den elastischen Aufsatz 5b in Alleinstellung, d.h. ohne Grundkörper 5a. In der perspektivischen Darstellung von Figur 3 ist zu erkennen, dass der Aufsatz 5b des Führungselements 5 einen Kopfbereich 5bk aufweist, der zu beiden Seiten von zwei flügelförmigen Elementen flankiert wird. Die beiden Flügelelemente schließen senkrecht an den Kopfbereich an. Jedes der beiden Flügelelemente ist in einen an den Kopfbereich anschließenden vorderen Bereich und einen daran anschließenden hinteren Bereich untergliedert. Der hintere Bereich weist zwei Fortsätze auf, die über den vorderen Bereich gabelförmig verbunden sind. Die Fortsätze sind so gekrümmt oder geneigt, dass der Abstand ihrer nach außen zeigenden Seiten mit zunehmender Entfernung vom Kopfteil zunimmt. Mit anderen Worten nimmt der Abstand der einander gegenüberliegenden Außenflächen der beiden Fortsätze 5b' und 5b" mit zunehmender Annäherung an das freie Ende der beiden Fortsätze zu.

Das in Figur 3 dargestellte Aufsatzelement 5b des Führungselements 5 weist an jedem Flügel eine Montageausnehmung 5bx zur Aufnahme eines am Grundkörper 5a des Führungselements 5 ausgeformten Montagevorsprungs 5ax auf. Der Aufsatz 5b ist aus einem elastischen Material gefertigt und kann daher einfach über den Grundkörper 5a des Führungselements 5 geschoben werden, bis der Montagevorsprung 5ax in die Montageausnehmung 5bx eingreift und so einen Formschluss herstellt.

Der Grundkörper 5a ist fest mit einem Ende verbunden oder am Ende der Spindel ausgeformt. Die Flügelelemente des Aufsatzelements 5b greifen dabei in die Nuten 4, die in dem vom Spindelgehäuse gebildeten Bezugskörper 3 ausgebildet sind. Die Breite der Flügelelemente des Aufsatzelements 5b ist an den freien Enden der beiden Fortsätze 5b' und 5b" größer als die Breite der Nut 4, d.h. größer als der Abstand der Nutflanken. Beim Einbringen der Flügelelemente in die Nut 4 werden die beiden Fortsätze 5b' und 5b" daher elastisch zusammengedrückt, wodurch sie eine Federkraft entwickeln, die für einen steten Andruck der Fortsätze an die Nutenflanken sorgt. Bei einem Verdrehen der Spindelmutter 1 wird aufgrund der zwischen Spindelmutter 1 und Gewindespindel 2 bestehenden Reibung auf die Gewindespindel 2 ein Drehmoment übertragen.

Über den Formschluss zwischen Grundkörper 5a und Aufsatzelement 5b wird dieses Drehmoment auch auf die in der Nut 4 eingebrachten Flügelelemente des Aufsatzes 5b übertragen, wodurch sich der Druck auf einen der Fortsätze 5b' oder 5b" erhöht. Hierdurch wird eines der Fortsatzelemente belastet, während das andere Fortsatzelement aufgrund der ihm eigenen Federwirkung sich etwas entspannt, aber weiterhin an der Nutflanke anliegt. Die Flügelelemente des Aufsatzes 5b stehen daher über die beiden Fortsätze 5b' und 5b" stets in unmittelbarem Kontakt mit den Nutflanken, so dass bei der Übertragung eines Drehmoments auf die Gewindespindel 2 die seitlichen Flanken eines Flügelelements nicht gegen die Nutflanken schlagen können. Durch die Spreizung der Fortsatzelemente wird somit ein sanftes Anlegen der Flügelelemente des Aufsatzelements 5b an die Nutflanken und hierüber eine geräuschminimierte Linearführung der Gewindespindel erzielt.

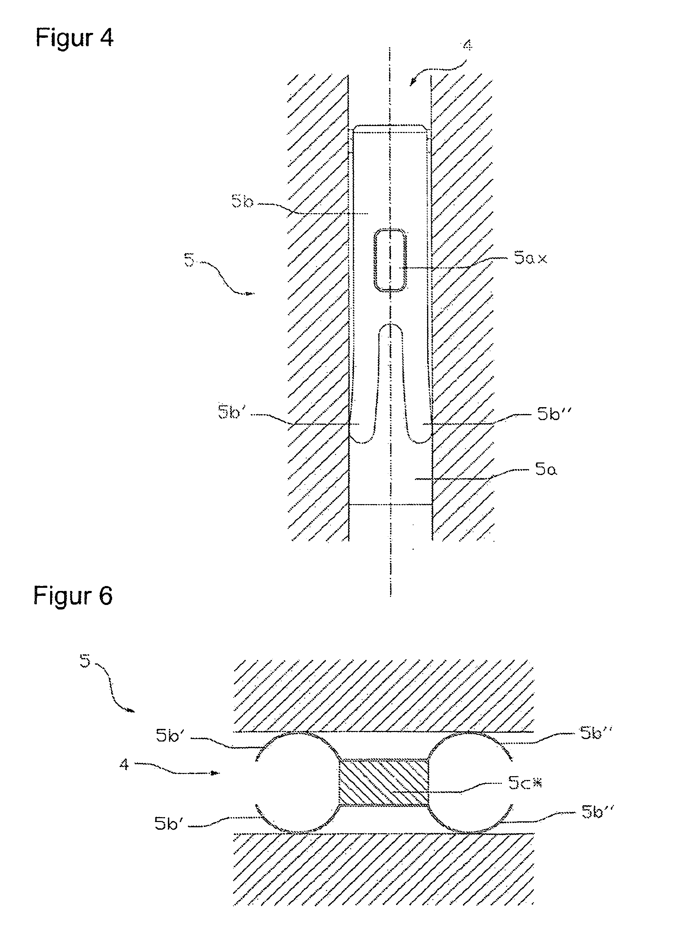

In der Figur 4 ist die Anordnung eines Flügelelements des Aufsatzelements 5b in einer Nut 4 dargestellt. Die Breite des Flügels ist an den nicht von den Fortsätzen gebildeten Bereichen des Aufsatzelements 5b kleiner als der Abstand der Nutflanken, d.h. die Breite der Nut. Die Differenz zwischen der Breite des Flügelelements und der Breite der Nut ist in der Figur 4 jedoch übertrieben dargestellt und dient lediglich der Verdeutlichung des Prinzips. In der Praxis wird diese Differenz minimiert, d.h. auf das zur Herstellung einer geringen Reibung erforderliche Maß eingestellt. Durch das Zusammendrücken der Fortsätze 5b' und 5b" beim Einbringen der Flügelelemente in die Nut 4 liegen die freien Enden dieser Fortsätze immer mit einer bestimmten Kraftwirkung an den Nutflanken an. Aus herstellungstechnischen Gründen verlaufen die beiden Nutflanken oftmals nicht parallel zueinander, sondern in einem kleinen Winkel. Dies führt dazu, dass die Nutbreite in Längsrichtung der Nut zu- bzw. abnimmt. In diesem Fall ist die Breite des Flügelelements im vorderen Bereich an die geringste Nutbreite angepasst, während die Breite des Flügelelements im hinteren Bereich, z.B. durch geeignete Spreizung der Fortsätze, an die maximale Nutbreite im Verschiebebereich der Linearführung angepasst ist. In der in den Figuren 2, 3 und 4 gezeigten Ausführungsform, stehen die beiden Fortsätze 5b' und 5b" nur über eine kleine Berührungsfläche mit den Nutflanken in Kontakt. Zur besseren Abstützung des Drehmoments können die freien Enden der Fortsätze 5b' und 5b" jedoch auch so geformt sein, dass sie einen größeren Berührungsbereich mit den Nutflanken aufweisen.

Das in den Figuren 1 bis 4 vorgestellte Führungselement dient der Abstützung des Drehmoments in zwei sich diametral gegenüberliegenden Nuten 4, die in dem Spindelgehäuse 3 angeordnet sind. Die Verwendung zweier Nuten 4 ist nicht unbedingt erforderlich, vielmehr kann die Linearführung auch mit nur einer solchen "Nut- und Federverbindung" realisiert werden. In Fällen, in denen große Drehmomente abgestützt werden müssen, empfehlt sich jedoch die Verwendung von zwei und eventuell auch mehr als zwei entsprechenden "Nut- und Federverbindungen".

Abweichend von der in den Figuren 2 bis 4 dargestellten beispielhaften Ausführungsform kann das Führungselement 5 auch einstückig ausgeführt sein, wobei das Führungselement 5 in diesem Fall vorzugsweise entweder monolithisch in einem Stück aus einem elastischen Material (wie beispielsweise Metall, Kunststoff oder einem Faserwerkstoff) gefertigt, oder als Verbundkörper ausgeführt ist. Bei einer Ausführung als Verbundkörper kann das Führungselement 5 eine Armierung im Inneren des Kunststoffkörpers enthalten. In einer weiteren Ausführungsform, die mit der eine Armierung aufweisenden Ausführungsform kombiniert werden kann, ist im Inneren des Kunststoffkörpers eine Metallfeder angeordnet, die den in die Nut 4 bzw. Nuten 4 der Linearführung eingreifenden Bereichen die erforderliche Elastizität verleiht. Beispielsweise kann das Aufsatzelement 5b von Figur 3 V- oder U-förmige Blattfedern enthalten, deren Schenkel jeweils innerhalb zweier benachbarter Fortsätze 5b' und 5b" angeordnet sind. Die Feder kann sich jedoch auch über den Kopfbereich des Aufsatzelements erstrecken, der die beiden als "Flügel" ausgebildeten elastischen Bereiche 5b miteinander verbindet. In diesem Fall sind die Schenkel der Feder innerhalb der "Flügel" und der beide Schenkel verbindende Steg innerhalb des Kopfbereichs angeordnet.

Weiterhin kann das Aufsatzelement 5b auch mehrteilig ausgeführt sein, beispielsweise aus zwei Hälften, die z.B. über eine Schnappverbindung in Formschluss gebracht werden können. Selbstverständlich können die einzelnen Teile des Aufsatzelements 5b auch mithilfe anderer Techniken, wie z.B. Kleben, Schweißen, Löten oder dergleichen zusammengefügt werden. Eine mechanische Verbindung beider Teile ist jedoch nicht notwendig, da die Teile bei geeigneter Ausführung auch vom Gehäuse der Linearführung in der vorgesehenen Position gehalten werden können. Der Aufsatzkörper 5b kann auch aus mehr als zwei Elementen bestehen, beispielsweise aus zwei Flügelelementen zum Eingriff in die Nuten 4 die über ein Kopfelement in der vorgesehenen Position gehalten werden.

Ferner können die in die Nuten 4 eingreifenden elastischen Bereiche des Führungselements 5 auch an dessen Seite, d.h. nicht wie in den Figuren 2 und 3 gezeigt zu einem Ende des Führungselements 5 hin angeordnet sein. Ein entsprechendes Beispiel ist in der Figur 5a dargestellt. Zusätzlich zu den beiden Fortsätzen 5b' und 5b" an den freien Enden der beiden "Flügel" weist das Ausatzelement 5b noch einen weiteren elastischen Bereich 5b"' auf, der von einer Verdickung des jeweiligen "Flügels" am Ansatz zum Kopfbereich 5bk des Aufsatzelements 5b gebildet wird, wobei die Verdickung eine Ausnehmung in ihrem Inneren aufweist.

Weiterhin kann der elastische Bereich auch direkt am Kopfende des Führungselements 5 ausgebildet sein, beispielsweise als Fortsätze 5b' und 5b" eines wie in der Figur 5b dargestellten Aufsatzelements 5b.

Die schematische Darstellung von Figur 6 veranschaulicht eine weitere alternative Ausführungsform einer geräusch- und schwingungsminimierten Linearführung. Das Führungselement 5 umfasst hierbei einen Mitnehmer 5c*, dessen Funktion mit der von der Ausnehmung 5c des in Figur 2 dargestellten Führungselements übereinstimmt. Statt als Mitnehmer für das zu verschiebende Objekt kann das Teil 5c* auch von einem Teil des zu verschiebenden Objekts selbst gebildet sein. Die rechteckige Form des Mitnehmers stellt nur ein Beispiel und keine verbindliche Form dar. An dem Teil 5c* sind zwei Metallfedern 5bf angebracht, die sich an den Flanken der Nut 4 abstützen. Die Federn 5bf können, müssen jedoch nicht mit Kunststoff beschichtet sein.

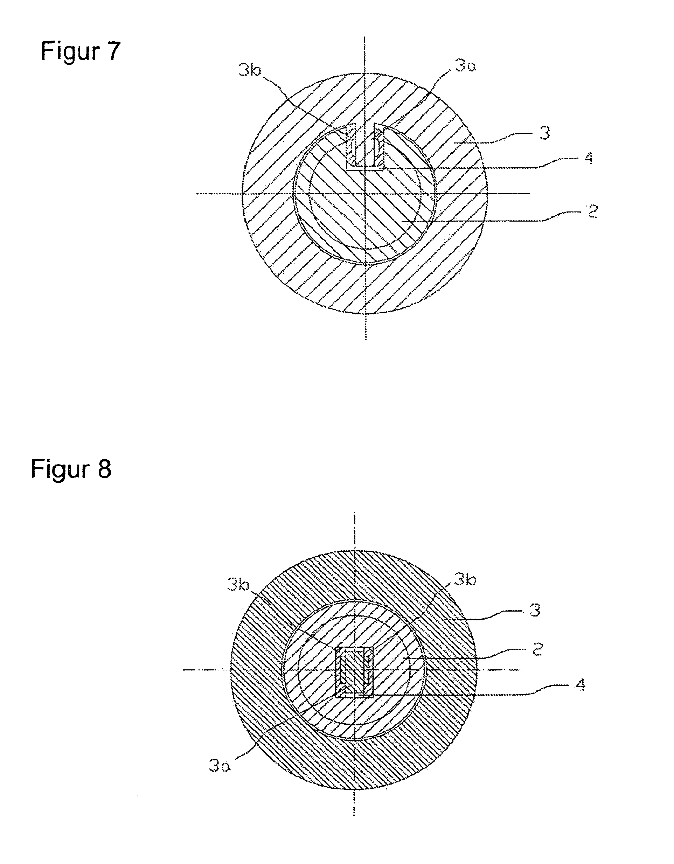

In einer anderen Ausführungsform ist die Nut nicht im Bezugskörper des Spindeltriebs 10, d.h. im vorliegenden Fall im Spindelgehäuse 3 ausgebildet, sondern an der Spindel, wie in der Figur 7 dargestellt. Entsprechend ist in dieser Ausführungsform das Führungselement an dem vom Spindelgehäuse 3 gebildeten Bezugskörper ausgebildet. Wie der Querschnittsdarstellung von Figur 7 entnommen werden kann, weist das (hier nicht mit einem eigenen Bezugszeichen versehene) Führungselement einen parallel zur Spindelachse verlaufenden Steg 3a auf, der den Grundkörper des Führungselements bildet. Der Steg kann sich über den gesamten Teil des Spindelgehäuses 3, bis zur Spindelmutter erstrecken, wenn die Nut 4 in der Gewindespindel entsprechend lange ausgeführt ist. Mit dem Steg 3a sind ein oder mehrere elastische Elemente 3b formschlüssig verbunden, deren Außenflächen gegen die Nutflanken drücken.

Bei der in der Figur 8 dargestellten Ausführungsform ist die Nut im Wesentlichen als axiale Öffnung innerhalb der Gewindespindel 2 ausgebildet. In diese Öffnung greift ein aus einem stangenförmigen Grundkörper 3a mit den daran angebrachten elastischen Bereichen 3b gebildetes Führungselement stirnseitig ein.

Die elastischen Bereiche 3b bzw. 5b, beispielsweise das Figur 3 dargestellte Aufsatzelement, können auch aus einem metallischen Material wie beispielsweise Federstahl hergestellt werden. Zum Sicherstellen einer geringeren Reibung an den Nutflanken werden jedoch zumindest die mit den Nutflanken in Berührung stehenden Flächen vorzugsweise mit einem Kunststoffmaterial versehen.

Die vorgestellte Linearführung für einen Spindeltrieb ermöglicht einen Ausgleich des Spiels des in einer Nut 4 geführten Bereichs eines Führungselements. Dieser Spielausgleich wird durch eine elastische Ausführung, beispielsweise mittels federnder Enden des in der Nut geführten Bereichs erzielt. Selbstverständlich können auch andere Bereiche wie z.B. der Mittenbereich federnd ausgeführt sein. Bei dem in der Figur 7 dargestellten Beispiel ist der in der Nut geführte elastische Bereich des Führungselements in Form eines aus einem elastischen Material hergestellten Hohlkörper ausgebildet. Der elastisch gegen die Nutflanken drückende Bereich des Führungselements dämpft eine schwingende Bewegung des Spindelantriebs. Da diese schwingende Bewegung zu Geräuschbildung und erhöhtem Verschleiß führt, werden mit der vorgestellten Linearführung sowohl die Geräuschentwicklung minimiert, als auch der Verschleiß verringert.

### Bezugszeichenliste

- 1: Spindelmutter
- 2: Gewindespindel
- 3: Bezugskörper
- 3a: am Bezugskörper ausgeformter Grundkörper des Führungselements
- 3b: elastischer Bereich des am Bezugskörper angeordneten Führungselements
- 4: Nut der Linearführung
- 5: Führungselement der Linearführung
- 5a: Grundkörper des Führungselements
- 5ax: Montagevorsprung
- 5b: elastischer Bereich des Führungselements / Aufsatzelement
- 5b': erster Fortsatz
- 5b": zweiter Fortsatz
- 5b"': dritter elastischer Bereich
- 5bk: Kopfbereich, Kopfteil
- 5bx: Montageausnehmung
- 5bf: Stützfeder
- 5c: Montageöffnung des Führungselements
- 5c*: Mitnehmer
- 6: Antrieb
- 7: Getriebe
- 7a: erstes Getrieberad
- 7b: zweites Getrieberad
- 8: Getriebegehäuse
- 9: Achse der Gewindespindel
- 10: Spindeltrieb

## Patentansprüche

1. Spindeltrieb mit einer Spindelmutter (1) und einer mittels einer Linearführung an einem Bezugskörper (3) drehfest und axial verschiebbar gelagerten Gewindespindel (2), wobei die Achse (9) der Gewindespindel (2) parallel zur Längsrichtung der Linearführung angeordnet ist, wobei die Linearführung eine Nut (4) und ein in die Nut eingreifendes Führungselement (5) aufweist,**dadurch gekennzeichnet, dass** das Führungselement einen elastischen Bereich (5b, 5b', 5b") umfasst, dessen Breite quer zur Längsrichtung der Linearführung größer als die maximale Nutbreite im zur Linearführung genutzten Bereich ist.

2. Spindeltrieb nach Anspruch 1, worin der elastische Bereich (5b) des Führungselements ein Federelement umfasst.

3. Spindeltrieb nach Anspruch 2, worin das Federelement zwei gabelförmig miteinander verbundene Fortsätze (5b', 5b") aufweist, die so angeordnet sind, dass der äußere Abstand der freien Enden der Fortsätze quer zur Längsrichtung der Linearführung im unbelasteten Zustand größer als die Nutbreite im zur Linearführung genutzten Bereich ist.

4. Spindeltrieb nach Anspruch 1, 2 oder 3, worin das Führungselement einen Grundkörper (5a) umfasst, der mit einem den elastischen Bereich umfassenden Aufsatzelement (5b) formschlüssig verbindbar ausgebildet ist.

5. Spindeltrieb nach einem der vorhergehenden Ansprüche, worin die Linearführung wenigstens zwei Nuten (4) umfasst, die parallel zueinander und parallel zur Achse (9) der Gewindespindel (2) angeordnet sind.

6. Spindeltrieb nach einem der vorhergehenden Ansprüche, worin die Nut (4) der Linearführung an dem Bezugskörper (3) und das Führungselement (5) an der Gewindespindel (2) angeordnet ist.

7. Spindeltrieb nach einem der vorhergehenden Ansprüche, worin die Nut (4) der Linearführung an der Gewindespindel (2) und das Führungselement (5) an dem Bezugskörper (3) angeordnet ist.

8. Spindeltrieb nach einem der vorhergehenden Ansprüche, worin die zum Kontaktieren der Seitenflächen der Nut (4) bestimmten Flächen des Führungselements (5) als Kunststoffoberflächen ausgebildet sind.

## Claims

1. Spindle drive with a spindle nut (1) and with a threaded spindle (2) mounted fixedly in terms of rotation and axially displaceably on a reference body (3) by means of a linear guide, the axis (9) of the threaded spindle (2) being arranged parallel to the longitudinal direction of the linear guide, the linear guide having a groove (4) and a guide element (5) which engages into the groove, **characterized in that** the guide element comprises an elastic region (5b, 5b', 5b"), of which the width transversely to the longitudinal direction of the linear guide is greater than the maximum groove width in the region used for linear guidance.

2. Spindle drive according to Claim 1, wherein the elastic region (5b) of the guide element comprises a spring element.

3. Spindle drive according to Claim 2, wherein the spring element has two extensions (5b', 5b") which are connected to one another in a fork-shaped manner and are arranged such that the outer spacing of the free ends of the extensions transversely to the longitudinal direction of the linear guide in a non-loaded state is greater than the groove width in the region used for linear guidance.

4. Spindle drive according to Claim 1, 2 or 3, wherein the guide element comprises a basic body (5a) which is designed to be connectable with a form fit to an attachment element (5b) comprising the elastic region.

5. Spindle drive according to one of the preceding claims, wherein the linear guide comprises at least two grooves (4) which are arranged parallel to one another and parallel to the axis (9) of the threaded spindle (2).

6. Spindle drive according to one of the preceding claims, wherein the groove (4) of the linear guide is arranged on the reference body (3) and the guide element (5) is arranged on the threaded spindle (2).

7. Spindle drive according to one of the preceding claims, wherein the groove (4) of the linear guide is arranged on the threaded spindle (2) and the guide element (5) is arranged on the reference body (3).

8. Spindle drive according to one of the preceding claims, wherein the faces of the guide element (5) which are intended for contacting the side faces of the groove (4) are designed as plastic surfaces.

## Revendications

1. Commande à broche comportant un écrou de broche (1) et une broche filetée (2) montée au moyen d'un guidage linéaire sur un corps de référence (3) de manière immobile en rotation et mobile axialement, l'axe (9) de la broche filetée (2) étant agencé parallèlement à la direction longitudinale du guidage linéaire, le guidage linéaire présentant une rainure (4) et un élément de guidage (5) entrant en prise dans ladite rainure (4), **caractérisée en ce que** l'élément de guidage (5) comprend une zone élastique (5b, 5b', 5b") dont la largeur transversalement à la direction longitudinale du guidage linéaire est supérieure à la largeur maximale de la rainure dans la zone utilisée pour le guidage linéaire.

2. Commande à broche selon la revendication 1, dans laquelle la zone élastique (5b) de l'élément de guidage comporte un élément à ressort.

3. Commande à broche selon la revendication 2, dans laquelle l'élément à ressort présente deux prolongements (5b', 5b"), qui sont reliés l'un à l'autre en forme de fourche et sont agencés de telle sorte que, à l'état non chargé, la distance extérieure des extrémités libres des prolongements transversalement à la direction longitudinale du guidage linéaire est supérieure à la largeur de la rainure dans la zone utilisée pour le guidage linéaire.

4. Commande à broche selon la revendication 1, 2 ou 3, dans laquelle l'élément de guidage comporte un corps de base (5a) qui est conçu pour être relié par complémentarité de forme à un élément de couronnement (5b) comprenant la zone élastique.

5. Commande à broche selon l'une quelconque des revendications précédentes, dans laquelle le guidage linéaire comporte au moins deux rainures (4) qui sont agencées parallèlement entre elles et parallèlement à l'axe (9) de la broche filetée (2).

6. Commande à broche selon l'une quelconque des revendications précédentes, dans laquelle la rainure (4) du guidage linéaire est agencée sur le corps de référence (3) et l'élément de guidage (5) est agencé sur la broche filetée (2).

7. Commande à broche selon l'une quelconque des revendications précédentes, dans laquelle la rainure (4) du guidage linéaire est agencée sur la broche filetée (2) et l'élément de guidage (5) est agencé sur le corps de référence (3).

8. Commande à broche selon l'une quelconque des revendications précédentes, dans laquelle certaines surfaces de l'élément de guidage (5), destinées à entrer en contact avec les faces latérales de la rainure (4), sont façonnées sous forme de surfaces en matière plastique.
